Europäisches Patentamt

European Patent Office

Office européen des brevets

(11) Veröffentlichungsnummer: **0 478 869 A1**

# (12) EUROPÄISCHE PATENTANMELDUNG

(21) Anmeldenummer: **90810756.8**

(22) Anmeldetag: **03.10.90**

(51) Int. Cl.5: **B23B 31/02**, B23Q 3/12

(43) Veröffentlichungstag der Anmeldung:
**08.04.92 Patentblatt 92/15**

(84) Benannte Vertragsstaaten:
**AT BE CH DE DK ES FR GB GR IT LI LU NL SE**

(71) Anmelder: **IWM HOLDING AG**
**Waldgasse 19**
**CH-3360 Herzogenbuchsee(CH)**

(72) Erfinder: **Hirscheider, Reinhard**
**Bayernstrasse 2**
**W-8543 Hilpoltstein(DE)**

(74) Vertreter: **Tschudi, Lorenz et al**
**Bovard AG Patentanwälte VSP**
**Optingenstrasse 16**
**CH-3000 Bern 25(CH)**

(54) **Spannvorrichtung für einen Werkzeughalter.**

(57) Die Spannvorrichtung (4) weist eine Aufnahmeöffnung (5) für einen Werkzeughalter (6) auf und
besitzt ein von aussen betätigbares Antriebselement
(13) zum Spannen oder Entspannen des in die Aufnahmeöffnung (5) eingeführten Werkzeughalters (6).
Das Antriebselement (13) wirkt auf ein Spannorgan
(27), welches um die Achse der Aufnahmeöffnung
(5) drehbar gelagert ist und dem Werkzeughalter (6)
zugewandte Verriegelungsmittel (30) aufweist. Die
Aufnahmeöffnung (5) der Spannvorrichtung (4) ist in
einen vorderen Zentrierbereich (14) und in einen
hinteren Spannbereich (26) unterteilt. Auf der inneren
Umfangsfläche des Spannbereiches (26) sind erste
Führungsmittel (28) vorhanden, welche mit zweiten
Führungsmitteln (29), die am Spannorgan (27) angeordnet sind, in Eingriff stehen. Beim Drehen des
Spannorganes um die Achse der Aufnahmeöffnung
erfährt dieses durch die genannten Führungsmittel
(28, 29) zusätzlich eine Längsbewegung, relativ zur
Aufnahmeöffnung. Während dieser Längsbewegung
und je nach Drehrichtung des Spannorganes, sind
die Verriegelungsmittel (30) mit weiteren Verriegelungsmitteln (31), die am Werkzeughalter (6) angeordnet sind, ver- oder entriegelbar. Die Spannvorrichtung ist insbesondere zum Einsatz an Endenbearbeitungsmaschinen geeignet. Die Spannvorrichtung ist dabei an einem Planschieber (3), welcher
auf einem um seine Längsachse rotierbaren Plandrehkopf radial verschiebbar gelagert ist, angeordnet. Die Spannvorrichtung zeichnet sich durch ihre
geringe Bauhöhe und durch ihre sichere Funktionsweise aus.

FIG. 1

Die vorliegende Erfindung bezieht sich auf eine Spannvorrichtung für einen Werkzeughalter gemäss dem Oberbegriff des Patentanspruches 1.

Die erfindungsgemässe Spannvorrichtung ist insbesondere dazu geeignet, um bei Endenbearbeitungsmaschinen eingesetzt zu werden. Endenbearbeitungsmaschinen gehören zu den spanenden Werkzeugmaschinen, bei denen das Werkstück festgespannt steht und die Werkzeuge rotierend angetrieben, sowohl axial gegen das Werkstück zugestellt als auch radial zur rotierenden Antriebsachse verschoben werden können. Die Radialverschiebung des Werkzeuges erfolgt dabei mit einem Planschieber am umlaufenden Plandrehkopf. Der Planschieber enthält die erfindungsgemässe Spannvorrichtung zum Aufnehmen und lösbaren Festhalten eines Werkzeughalters. Endenbearbeitungsmaschinen werden zur Bearbeitung solcher Werkstücke eingesetzt, die nur schwer zu zentrieren und/oder selbst in Rotation zu versetzen sind, beispielsweise zur Bearbeitung von Statorgehäusen grösserer Elektromotoren oder von langem Stangenmaterial, das bei einem eigenen Rundlauf leicht ins Flattern kommen würde.

Bei der Konstruktion einer Spannvorrichtung, die für die obgenannte Verwendung vorgesehen ist, ist besonders darauf zu achten, dass die Massen sowohl der Spannvorrichtung als auch des damit festgehaltenen Werkzeughalters möglichst klein sind. Dadurch lassen sich Unwuchten, die entstehen, wenn der Planschieber am rotierenden Plandrehkopf radial aus dem Zentrum verschoben ist, reduzieren.

In der US-Patentschrift US 4758122 ist eine Spannvorrichtung offenbart, in welcher ein Werkzeughalter mit einem konischen Schaft in eine konisch ausgebildete Aufnahmeöffnung einer Spindel eingesetzt wird. An dem der Spindel zugewandten Ende des Werkzeughalters sind zwei sich gegenüberliegende, radial abstehende Halteklauen ausgebildet, welche zum Festhalten des Werkzeughalters mit je einem nach innen ragenden Vorsprung eines im wesentlichen zylindrischen Körpers, der innerhalb der Aufnahmeöffnung um die Längsachse der Oeffnung verschwenkbar angeordnet ist, in Eingriff bringbar sind. Dieser im wesentlichen zylindrische Körper weist ein Innengewinde auf, welches mit einem an einem drehbaren Körper angeordneten Aussengewinde in Eingriff steht. Durch Drehen dieses axial unverschiebbar drehbar gelagerten Körpers wird der zylindrische Körper durch das genannte Gewinde in axialer Richtung verschoben, wobei der Werkzeughalter je nach Drehrichtung des drehbaren Körpers gespannt oder entspannt wird. Die Verschwenkung des zylindrischen Körpers zum Koppeln der Vorsprünge mit den Klauen geschieht durch Gleitreibung, welche durch einen O-Ring erzeugt wird, der zwischen dem verschwenkbaren Körper und dem drehbaren Körper angeordnet ist. Der drehbare Körper ist über ein damit gekoppeltes Zahnrad zum Spannen oder Entspannen des Werkzeughalters antreibbar. Die Verschwenkbewegung des zylindrischen Körpers ist durch einen in der Spindel angeordneten radial gerichteten Anschlag und durch eine im zylindrischen Körper eingearbeitete Nut begrenzt. Die in dieser US-Patentschrift offenbarte Spannvorrichtung ist vor allem zum Einsatz in üblichen Drehautomaten geeignet.

Wie eingangs bereits gesagt worden ist, ist bei Endenbearbeitungsmaschinen darauf zu achten, dass durch konstruktive Massnahmen die Massen der am Planschieber angeordneten Spannvorrichtung sowie des darin eingespannten Werkzeughalters möglichst kleingehalten werden. Andererseits muss bei der Konstruktion darauf geachtet werden, dass die grossen, am Werkzeug auftretenden Querkräfte, welche vom Werkzeughalter auf die Spannvorrichtung übertragen werden, aufgefangen werden können.

Zum Erfüllen dieser vorgenannten Forderungen hat man sich deshalb die Aufgabe gestellt, die Spannvorrichtung, die im Planschieber des Plandrehkopfes integriert ist, und den mit der Spannvorrichtung aufzunehmenden Werkzeughalter in einer möglichst niedrigen Bauweise zu realisieren. Die Lösung dieser Aufgabe konnte nicht der vorgangs beschriebenen US-Patentschrift entnommen werden, da durch den relativ aufwendigen Aufbau der dort offenbarten Spannvorrichtung durch die beiden in der Aufnahmeöffnung angeordneten vorgenannten Körper bereits eine zu grosse Bauweise vorgegeben ist. Im weiteren wirkt sich der zwischen den genannten Körpern angeordnete O-Ring zum Erzeugen der erforderlichen Gleitreibung zum Verschwenken des zylindrischen Körpers nachteilig auf eine lange störungs- bzw. wartungsfreie Betriebsdauer aus.

Eine weitere Aufgabe der vorliegenden Erfindung ist es deshalb, die Spannvorrichtung nicht nur in niedriger Bauweise zu realisieren, sondern diese durch eine möglichst einfache Konstruktion mit möglichst wenigen Teilen gegenüber der den Stand der Technik zeigenden Spannvorrichtung auch betriebssicherer zu machen.

Zum Lösen der gestellten Aufgaben ist eine Spannvorrichtung geschaffen worden, die die im kennzeichnenden Teil des Patentanspruches 1 aufgeführten Merkmale aufweist.

Die erfindungsgemässe Spannvorrichtung fällt durch ihre niedrige Bauweise auf. Diese konnte insbesondere dadurch erreicht werden, dass die Aufnahmeöffnung einen kurzen, dem Aufnahmeöffnungsmund zugewandten konischen Zentrierbereich aufweist, und einen daran anschliessenden, dem Aufnahmeöffnungsmund zugewandten Spannbereich. Auf der inneren Umfangsfläche des letzteren sind erste Führungsmittel angeordnet, die mit zweiten Führungsmitteln eines Spannorganes, welches im Bereich des Spannbereiches in der Aufnahmeöffnung drehbar gelagert ist, in Eingriff sind. Durch Verdrehen des Spannorganes erfolgt, hervorgerufen durch die genannten Führungsmittel, gleichzeitig eine axiale Verschiebung des letzteren. Kräftig ausgebildete Verriegelungsmittel, die am Spannorgan vorhanden sind, werden bei der genannten Drehbewegung des Spannorganes mit weiteren Verriegelungsmitteln, welche an einem in die Aufnahmeöffnung der Spannvorrichtung eingeführten Werkzeughalter vorhanden sind, in Eingriff gebracht. Beim Spannen des Werkzeughalters wird eine am letzteren angeordnete plane Fläche mit grosser Kraft gegen eine Anpressfläche an der Spannvorrichtung gepresst. Die beiden genannten Flächen sind rechtwinklig zur Achse der Aufnahmeöffnung angeordnet. Wesentlich ist, dass bei der vorliegenden Konstruktion, bei der Bearbeitung eines Werkstückes auf den Werkzeughalter einwirkende Querkräfte nicht, wie allgemein üblich, durch den konischen Kegel des Werkzeughalters auf die Spannvorrichtung übertragen werden, sondern dass diese durch die genannte plane Fläche und die Anpressfläche aufgefangen werden. Der zum Einsparen von Masse am Werkzeughalter nur kurz ausgebildete kegelstumpfförmige Ansatz dient zusammen mit dem gegengleich ausgebildeten Zentrierbereich der Aufnahmeöffnung im wesentlichen nur dem Zentrieren des Werkzeughalters.

Dadurch, dass die ersten Führungsmittel direkt am inneren Umfang eines zylindrischen Teiles im Spannbereich der Aufnahmeöffnung angeordnet sind und direkt mit den zweiten Führungsmitteln des Spannorganes in Eingriff stehen, kann die Spannvorrichtung relativ einfach mit wenigen Bauteilen aufgebaut werden.

Die genannten Führungsmittel sind vorzugsweise als Gewinde ausgebildet.

Durch ein von aussen zugängliches Antriebselement kann mittels einer einfachen Drehbewegung zum Spannen des Werkzeughalters das Spannorgan einerseits mit dem Werkzeughalter in Eingriff gebracht und andererseits der letztere fest gegen die genannte Anpressfläche gepresst werden. Dies geschieht im wesentlichen durch das Aufeinandergleiten der genannten Verriegelungsmittel. Diejenigen des Spannorganes weisen eine plane Einzugsfläche auf, welche beim Spannvorgang auf einer ebenfalls planen Angriffsfläche der weiteren Verriegelungsmittel des Werkzeughalters zum Gleiten kommt. Die Einzugsfläche des Spannorganes ist dabei parallel zur genannten Anpressfläche, welche den Mund der Aufnahmeöffnung der Spannvorrichtung umgibt. Die Angriffsfläche ist parallel zur planen Fläche des Werkzeughalters gearbeitet. Durch die Parallelität dieser genannten Flächen ist gewährleistet, dass der Werkzeughalter mit einer gleichmässig verteilten grossen Kraft an der Anpressfläche aufliegt.

In der erfindungsgemässen Spannvorrichtung sind keine speziellen Organe erforderlich, die ausschliesslich einer Verschwenkung des Spannorganes dienen, um dessen Verriegelungsmittel mit den weiteren Verriegelungsmitteln des Werkzeughalters in Eingriff zu bringen, bevor mit dem eigentlichen Spannvorgang begonnen werden kann. Bei der erfindungsgemässen Spannvorrichtung werden die beiden obgenannten Funktionen durch die besondere Anordnung des Spannorganes zwangsläufig aufeinanderfolgend ausgeführt.

Anhand von Figuren ist ein bevorzugtes Ausführungsbeispiel der erfindungsgemässen Spannvorrichtung nachstehend näher erläutert. Es zeigen

Fig. 1    einen an einer Werkzeugmaschine angeordneten Plandrehkopf mit einem Planschieber, an dem die erfindungsgemässe Spannvorrichtung angeordnet ist, mit einem durch eine Werkzeugwechselvorrichtung zum Einsetzen in die genannte Spannvorrichtung vorbereiteten Werkzeughalter,

Fig. 2    eine Frontansicht der Spannvorrichtung,

Fig. 3    einen Schnitt durch die Spannvorrichtung gemäss der Linie III-III in der Fig. 2, und

Fig. 4    einen weiteren Schnitt durch die Spannvorrichtung gemäss der Linie IV/IV in der Fig. 2.

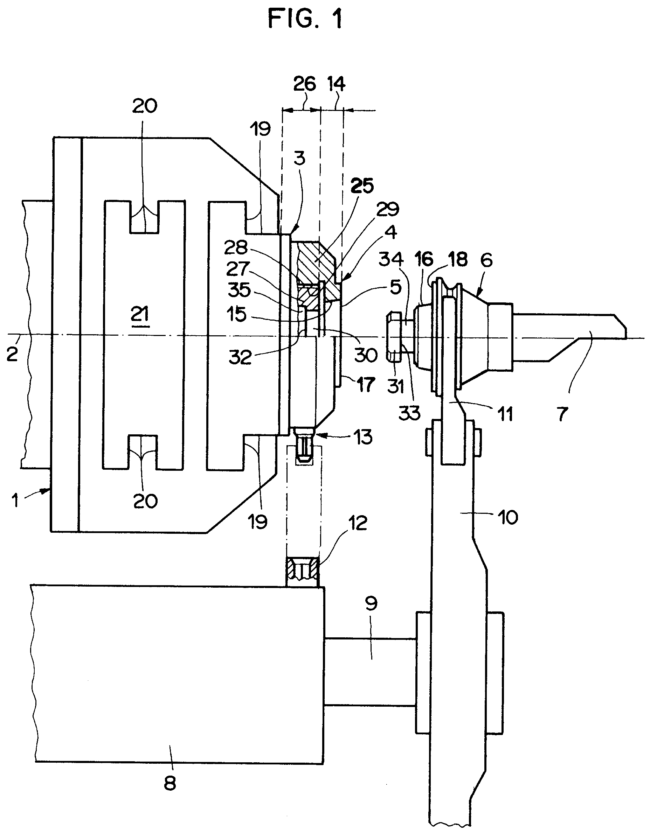

Die Fig. 1 soll einen Ueberblick über einen bevorzugten Einsatz der erfindungsgemässen Spannvorrichtung vermitteln. Ein Plandrehkopf 1 ist um eine Antriebsachse 2 rotierend antreibbar. Der Plandrehkopf weist einen radial verschiebbar gelagerten Planschieber 3 mit einer Spannvorrichtung 4 auf. Letztere besitzt eine Aufnahmeöffnung 5, in die ein Werkzeughalter 6 mit einem Werkzeug 7 einsetzbar ist. Wie weiter hinten beschrieben ist, kann der in die Aufnahmevorrichtung 4 eingesetzte Werkzeughalter 6 in eine zum Bearbeiten eines Werkstückes notwendige Spannstellung gebracht oder zum Austauschen mit einem anderen Werkzeughalter aus der Spannstellung gelöst werden. Bei Werkzeugmaschinen der eingangs genannten Art kann dieses Spannen und Lösen nicht wie bei normalen Bearbeitungszentren allgemein üblich, durch in der Antriebswelle angeordnete Vorrichtungen geschehen, weil sich die Achse der Aufnahmeöffnung 5 in variablen Abständen zur Antriebsachse 2 des Plandrehkopfes 1 befindet. Zum automatischen Auswechseln des Werkzeughalters 6 mit seinem Werkzeug 7 muss deshalb der Plandrehkopf 1 bzw. der Planschieber 3 in einer genau vorgegebenen Drehstellung bzw. radialen Lage angehalten werden. Dies geschieht mit ausreichender Genauigkeit nach bekannter Art vorzugsweise mit einer nicht dargestellten elektrischen Steuerung des Plandrehkopfes. Das Auswechseln des Werkzeughalters 6 erfolgt mittels eines Werkzeugwechslers 8, der einen bezüglich einer Bewegungsachse 9 symmetrischen Werkzeugwechselarm 10 mit je an seinem äusseren Ende angeordneten Greifzangen 11 aufweist. Der Werkzeugwechselarm 10 ist zum Zuführen eines Werkzeughalters 6 in die Spannvorrichtung 4 um die Bewegungsachse 9 drehbar und axial zur letztgenannten Achse verschiebbar. Der Werkzeugwechsler 8 umfasst im weiteren einen Schrauber 12, der mit einem von aussen zugänglichen Antriebselement 13 der Spannvorrichtung 4 zum Spannen oder Lösen des in die Aufnahmeöffnung 5 eingeführten Werkzeughalters 6 in Eingriff bringbar ist. Zum Zentrieren des Werkzeughalters 6 in der Spannvorrichtung 4 ist die Aufnahmeöffnung 5 an ihrem vorderen, dem Plandrehkopf 1 abgewandten und dem Aufnahmeöffnungsmund zugewandten Bereich als Zentrierbereich 14 ausgebildet. Dieser umfasst eine konische Innenfläche 15, welche mit einem am Werkzeughalter 6 korrespondierend ausgebildeten konischen Schaft 16 zusammenwirkt. Die axiale Länge des genannten Zentrierbereiches 14 ist mit Bezug auf den Durchmesser des Mundes der Aufnahmeöffnung 5 kurz ausgebildet. Diese Länge ist im allgemeinen kleiner gehalten als der halbe Druchmesser am vorderen Ende der Aufnahmeöffnung 5. Der genannte Zentrierbereich 14 soll im wesentlichen nur dem Zentrieren des Werkzeughalters 6 bei dessen Einführung in die Aufnahmeöffnung 5 dienen. Der Zentrierbereich ist insbesondere nicht dazu vorgesehen, um während der Bearbeitung auf den Werkzeughalter 6 wirkende Querkräfte aufzunehmen. Dazu ist die dem Plandrehkopf abgewandte Stirnfläche der Spannvorrichtung 4, welche als Anpressfläche 17 ausgebildet ist, und welche rechtwinklig zur Achse der Aufnahmeöffnung 5 steht, vorgesehen. In der Spannstellung des Werkzeughalters 6 liegt eine an diesem kreisringförmig ausgebildete plane Fläche 18 unter grossem Druck an der genannten Anpressfläche 17 an.

Der Planschieber 3 ist über in der Figur nur angedeutete Führungsflächen 19 im Plandrehkopf radial verschiebbar angeordnet. Der aus dem Zentrum verschobene Planschieber 3 erzeugt beim Rotieren des Plandrehkopfes 1 eine Unwucht, die mittels eines Gegenschiebers 21, der über Gleitmittel 20 gegengleich zum Planschieber 3 radial verschiebbar ist, bestmöglich ausgeglichen wird. Je kleiner die Masse des Planschiebers mit der Spannvorrichtung und dem Werkzeughalter gehalten werden kann, umso kleiner kann ebenfalls die Masse des Gegenschiebers 21 zum Ausgleichen der Unwucht gewählt werden. Kleine Massen wirken sich wiederum auf die aufzuwendende Antriebsleistung positiv aus. Ueber in der Figur nicht dargestellte Mittel sind sowohl der Planschieber 3 als auch der Gegenschieber 21 während des Rotierens des Plandrehkopfes 1 radial gegenläufig verschiebbar.

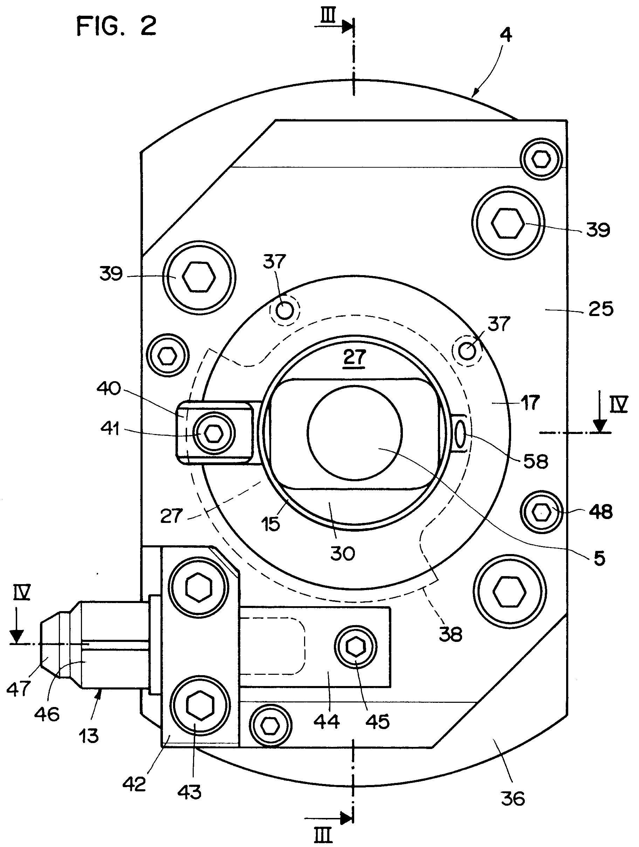

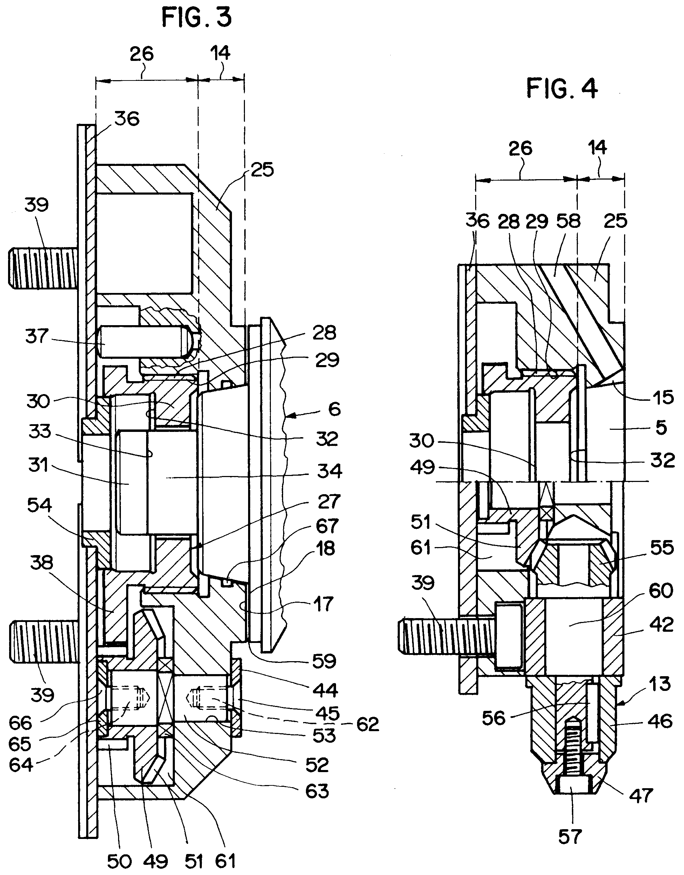

Aus den Fig. 2, 3 und 4 ist der Aufbau der erfindungsgemässen Spannvorrichtung im Detail ersichtlich. Zum besseren Verständnis sind die Figuren 2 und 4 ohne Werkzeughalter 6 gezeichnet. Einzig in der Fig. 3 ist der letztere zum Erklären des Spannvorganges in die Aufnahmeöffnung 5 der Spannvorrichtung 4 eingesetzt dargestellt.

Die Spannvorrichtung 4 umfasst im wesentlichen einen Gehäuseboden 36 und einen Gehäusekörper 25. Die beiden Teile sind mittels mehrerer Schrauben 48 zusammen befestigt. Beide Körper zusammen bilden im wesentlichen eine quaderförmige Einheit. In den Gehäusekörper 25 sind verschiedene Oeffnungen, Bohrungen und Aussparungen eingearbeitet, die dem Aufnehmen der verschiedenen Bauelemente der Spannvorrichtung dienen. Als erstes erstreckt sich die Aufnahmeöffnung 5, ungefähr zentral angeordnet, im wesentlichen durch den Gehäusekörper 25 hindurch. Auf der dem Planschieber abgewandten und dem aufzunehmenden Werkzeughalter 6 zugewandten Seite ist der genannte Zentrierbereich 14 als kegelstumpfförmige Innenfläche 15 ausgebildet. Anschliessend an den Zentrierbereich 14 folgt ein mit 26 bezeichneter Spannbereich. Dieser erstreckt sich in axialer Richtung der Aufnahmeöffnung 5 über den verbleibenden Rest des Gehäusekörpers 25. Der Spannbereich ist im wesentlichen in eine abgestufte zylindrische Ausdrehung mit unterschiedlichen Durchmessern unterteilt. Der an den Zentrierbereich anschliessende Teil der zylindrischen Ausdrehung weist einen Durchmesser auf, der wenig grösser ist als der Mund der Aufnahmeöffnung 5. Die zylindrische Ausdrehung ist auf der dem Gehäuseboden 36 zugewandten Seite beträchtlich erweitert. Der Durchmesser beträgt dort etwa das Doppelte des vorgenannten Durchmessers. In der zylindrischen Ausdrehung des Spannbereiches 26 ist ein Spannorgan 27 angeordnet. Dieses umfasst einen zylinderförmigen Teil, an dessen Aussenfläche zweite Führungsmittel 29 vorhanden sind, welche mit ersten Führungsmitteln 28 in Eingriff stehen. Die letzteren sind an der inneren Umfangsfläche der zylindrischen Ausdrehung in demjenigen Teil mit dem kleinen Durchmesser angeordnet. Die ersten und die zweiten Führungsmittel 28, 29 sind vorzugsweise als Gewinde ausgebildet. Das erste Führungsmittel 28 ist ein Innengewinde und das zweite Führungsmittel 29 ist ein auf dem zylinderförmigen Teil des Spannorganes 27 angebrachtes Aussengewinde. Das Spannorgan 27 weist auf seiner dem Zentrierbereich 14 zugewandten Seite eine in axialer Richtung verlaufende, im wesentlichen rechteckige Oeffnung auf. Diese Oeffnung wird von einem dem Zentrum des Spannorganes zugewandten Kragen 30 umschlossen, der als Verriegelungsmittel ausgebildet ist. Dieses Verriegelungsmittel 30 ist dazu bestimmt, um beim Spannen des in die Aufnahmeöffnung 5 eingeführten Werkzeughalters 6 mit an diesem angeordneten weiteren Verriegelungsmitteln 31 in Eingriff gebracht zu werden. Auf der dem Spannbereich 14 abgewandten Seite des genannten Kragens weist das Spannorgan 27 ebenfalls eine zylinderförmige Ausdrehung auf. Diese ist zum Aufnehmen der weiteren Verriegelungsmittel 31 nach dem Durchführen der letztgenannten durch die durch den Kragen 30 gebildete Oeffnung des Spannorganes 27 bestimmt. Der Durchmesser der letztgenannten Ausdrehung ist mindestens so gross, dass das Spannorgan 27 um die im wesentlichen als eine rechteckförmige Platte ausgebildeten weiteren Verriegelungsmittel 31 nach dem Durchführen derselben durch die genannte Oeffnung des Spannorganes 27 drehbar ist. Auf der dem Kragen 30 abgewandten Seite des Spannorganes 27 ist eine Zentrierscheibe 54 in die genannte zylindrische Ausdrehung des Spannorganes 27 eingesetzt, welche das letztere relativ zu einer Bohrung im Gehäuseboden 36 zentriert. Ebenfalls auf der dem Kragen 30 abgewandten Seite des Spannorganes 27 weist dieses ein radial nach aussen sich erstreckendes Stirnradsegment 38 auf. Dieses ragt in die beschriebene zylindrische Ausdrehung des Gehäusekörpers 25 des Spannbereiches 26 der Aufnahmeöffnung 5 in denjenigen Teil mit dem grösseren Durchmesser. Das Stirnradsegment 38 umschliesst den Umfang des Spannorganes 27 zwischen einem Drittel und der Hälfte. Sich parallel zur Achse der Aufnahmeöffnung 5 erstreckende Anschlagstifte 37 sind so angeordnet, dass sie eine Drehbewegung des Spannorganes 27 auf zirka 120° begrenzen. Jeder der Stifte 37 kommt dabei, je nach Drehrichtung des Spannorganes 27, mit je einer Seitenfläche des Stirnradsegmentes 38 zum Anliegen.

Durch das Drehen des Spannorganes 27 um die Achse der Aufnahmeöffnung 5, was, wie weiter hinten beschrieben ist, mittels eines von aussen zugänglichen Antriebselementes 13 erfolgen kann, erfährt das Spannorgan nebst der Drehbewegung durch die ineinander eingreifenden genannten Gewinde 28, 29 ebenfalls eine Längsverschiebung. Dadurch kommt eine dem vorderen Ende der Aufnahmeöffnung 5 abgewandte Einzugsfläche 32 der Verriegelungsmittel 30 mit einer dem vorderen Ende der Aufnahmeöffnung 5 zugewandten Angriffsfläche 33 der weiteren Verriegelungsmittel 31 in Eingriff. Die Einzugsfläche 32 ist dabei parallel zur bereits genannten Anpressfläche 17, die den Mund der Aufnahmeöffnung umgibt, ausgeführt. Die Angriffsfläche 33 der weiteren Verriegelungsmittel 31, die am Werkzeughalter 6 ausgebildet ist, ist parallel zur planen Fläche 18 gearbeitet, welche letztere zum Aufliegen an der Anpressfläche 17 bestimmt ist. Der gemäss der Fig. 3 in die Aufnahmeöffnung 5 eingeführte Werkzeughalter bildet zusammen mit der Spannvorrichtung vor dem Spannen zwischen der Anpressfläche 17 und der planen Fläche 18 einen kleinen Luftspalt in der Grössenordnung von ca. 1/100 mm. Durch das Verdrehen des Spannorganes 27 und die Längsverschiebung derselben, wird der Werkzeughalter 6 durch das Aufeinanderreiben der Einzugsfläche mit der Angriffsfläche in die Aufnahmeöffnung 5 der Spannvorrichtung hineingezogen. Die Steigung der Gewinde 28, 29 ist dabei so dimensioniert, dass spätestens nach einer Drehung des Spannorganes 27 um 120°, vorzugsweise aber um 90°, der genannte Luftspalt 29 aufgehoben und die erforderliche hohe Anpresskraft zwischen der Anpressfläche 17 und der planen Fläche 18 erreicht ist. Wie bereits gesagt, ist die Anpresskraft des Werkzeughalters 6 dank der Parallelität aller der soeben genannten Flächen gleichmässig über den ganzen Umfang verteilt.

Da bei der vorliegenden Konstruktion die Verriegelungsmittel 30, 31 keine schiefen Ebenen mit aufeinander abgestimmten Steigungswinkeln aufweisen, sondern zueinander parallele Flächen 32, 33, ist die Herstellung derselben einfach und kostengünstig.

Das in den Fig. 2 und 4 sichtbare und von ausserhalb der Spannvorrichtung zugängliche Antriebselement 13 umfasst eine Welle 60, an deren in der Spannvorrichtung liegendem Ende ein Kegelrad 55 angeordnet ist. Am anderen, aus der Spannvorrichtung herausragenden Ende ist ein Mehrkantaufsatz 46, beispielsweise ein Vier- oder Sechskantaufsatz, mittels eines Zentrierkegels 47 und einer Stirnschraube 57 befestigt. Der Mehrkantaufsatz 46 ist über einen Mitnehmerkeil 56 mit der Welle 60 drehverbunden. Die Welle 60 ist in einem Lagerbock 42, der mit Lagerbockbefestigungsschrauben 43 am Gehäusekörper 25 befestigt ist, drehbar gelagert. Das Kegelrad 55 ist dabei mit einer Abdeckung 44, die mit einer Schraube 45 befestigt ist, abgedeckt.

In einer seitlich zur Aufnahmeöffnung 5 verschobenen und vom Gehäuseboden 36 her zugänglichen Aussparung 61 des Gehäusekörpers 25 ist ein Doppelzahnrad 49 drehbar gelagert. Ein mit dem Doppelzahnrad 49 verbundener Lagerbolzen 52 durchdringt dabei im wesentlichen eine im Gehäusekörper 25 eingearbeitete Bohrung 53. Die vorgenannte Befestigungsschraube 45 greift in ein erstes, im Zentrum des Lagerbolzens 52 angeordnetes und längs zu diesem verlaufendes Gewinde 62 ein. Ungefähr mittig des Lagerbolzens 52 erstreckt sich ein sechskantförmiger Kragen 63 radial nach aussen. Durch die genannte Schraube 45 und den Kragen 63 ist der Lagerbolzen 52 am Gehäusekörper 25 festgehalten. Das Doppelzahnrad 49, das einen Stirnradteil 50 und einen dem Kragen zugewandten Kegelradteil 51 aufweist, ist auf das der Bohrung 53 abgewandte Ende des Lagerbolzens 25 aufgeschoben und mittels einer Scheibe 65 und einer Senkschraube 66 an einem zweiten Gewinde 64 befestigt, welches auf der Längsachse des Lagerbolzens 52 dem ersten Gewinde 62 gegenüberliegt.

Der Stirnradteil 50 des Doppelzahnrades 49 steht mit dem Stirnradsegment 38 des Spannorganes 27 in Eingriff. Der Kegelradteil 51 des Doppelzahnrades 49 greift in das Kegelrad 55 ein, welches ein Bestandteil des Antriebselementes 13 ist. Mit Hilfe des Doppelzahnrades 49 wird die rechtwinklig zur Längsachse der Aufnahmeöffnung 5 ausgeführte Drehbewegung des Antriebselementes 13 in eine konzentrisch zur genannten Längsachse verlaufende Drehbewegung des Spannorganes 27 umgewandelt. Die Spannvorrichtung 4 ist mittels Befestigungsschrauben 39 am Planschieber 3 befestigt. Eine schräg durch einen Bereich des Gehäusekörpers 25 verlaufende und in die konische Innenfläche 15 des Zentrierbereiches 14 mündende weitere Bohrung 58 dient dem Kühlmittelzufluss zum Werkzeug 7 in der Spannvorrichtung 6. Das Kühlmittel verteilt sich innerhalb einer Nut 67, welche sich von der Einmündung der weiteren Bohrung 58 über einen Teil des Umfanges der konischen Innenfläche 15 erstreckt. Eine nicht gezeigte weitere Nut, die im kegelstumpfförmigen Teil 16 des Werkzeughalters angeordnet ist, nimmt die zufliessende Kühlflüssigkeit auf und leitet sie durch ebenfalls nicht sichtbare, innerhalb des Werkzeughalters 6 angeordnete Kanäle dem Werkzeug 7 zu.

Ein Mitnehmerstein 40 ist mittels einer Mitnehmersteinbefestigungsschraube 41 an der dem Werkzeughalter 6 zugewandten Stirnseite der Spannvorrichtung 4 befestigt. Der Mitnehmerstein 40 greift in eine in den Figuren nicht sichtbare Ausnehmung im Werkzeughalter 6 ein und verhindert eine Verdrehung des letzteren gegenüber der Spannvorrichtung 4.

**Patentansprüche**

1. Spannvorrichtung für einen Werkzeughalter, insbesondere an einem Planschieber (3), welcher auf einem um seine Längsachse rotierbaren Plandrehkopf (1) radial verschiebbar gelagert ist, mit einer Aufnahmeöffnung (5) für den Werkzeughalter (6), mit einem von aussen betätigbaren Antriebselement (13) zum Spannen oder Entspannen des in die Aufnahmeöffnung (5) eingeführten Werkzeughalters (6), wobei das Antriebselement (13) auf ein Spannorgan (27) wirkt, welches um die Achse der Aufnahmeöffnung (5) drehbar gelagert ist und dem Werkzeughalter (6) zugewandte Veriegelungsmittel (30) aufweist, und wobei die Aufnahmeöffnung in einen vorderen Zentrierbereich (14) und in einen hinteren Spannbereich (26) unterteilt ist, dadurch gekennzeichnet, dass auf einer inneren Umfangsfläche des Spannbereiches (26) erste Führungsmittel (28) vorhanden sind, und dass das Spannorgan (27) zweite Führungsmittel (29) aufweist welche mit den ersten Führungsmitteln (28) so im Eingriff sind, dass das Spannorgan (27) beim Drehen um die Achse der Aufnahmeöffnung (5) eine Längsbewegung relativ zur letzteren erfährt, wobei die Verriegelungsmittel (30) während der Längsbewegung und je nach Drehrichtung des Spannorganes mit am Werkzeughalter angeordneten weiteren Verriegelungsmitteln (31) ver- oder entriegelbar sind.

2. Vorrichtung nach Anspruch 1, dadurch gekennzeichnet, dass das vordere Ende der Aufnahmeöffnung (5) von einer rechtwinklig zur Achse der letzteren sich erstreckenden Anpressfläche (17) umgeben ist, dass der Werkzeughalter (6) eine zur Anpressfläche (17) korrespondierende plane Fläche (18) aufweist, und dass die beiden Flächen (17, 18) im eingespannten Zustand des Werkzeughalters (6) so stark aneinandergepresst sind, dass dadurch die während eines Bearbeitungsvorganges auf den Werkzeughalter (6) wirkenden Querkräfte aufnehmbar sind.

3. Vorrichtung nach Anspruch 1 oder 2, dadurch gekennzeichnet, dass die achsiale Länge des Zentrierbereiches (14) kleiner ist als der am vorderen Ende der Aufnahmeöffnung (5) vorhandene halbe Druchmesser der letzteren.

4. Vorrichtung nach einem der Ansprüche 1 bis 3, dadurch gekennzeichnet, dass die ersten Führungsmittel ein Innengewinde (28) und die zweiten Führungsmittel ein Aussengewinde (29) sind.

5. Vorrichtung nach Anspruch 4, dadurch gekennzeichnet, dass das Spannorgan (27) im wesentlichen ein hohlzylindrischer Körper ist auf dessen äusseren Umfangsfläche das Aussengewinde (29) angeordnet ist, wobei im Bereiche der einen dem vorderen Ende der Aufnahmeöffnung (5) zugewandten Stirnseite des Spannorganes (27) die Verriegelungsmittel (30) zum Festhalten des Werkzeughalters (6) vorhanden sind und im Bereiche der anderen Stirnseite ein Segment (38) eines Stirnrades angeordnet ist.

6. Vorrichtung nach Anspruch 5, dadurch gekennzeichnet, dass die Verriegelungsmittel (30) mindestens eine zur Anpressfläche (17) parallele Einzugsfläche (32) aufweisen, und dass die Einzugsfläche (32) beim entsprechenden Drehen des Spannorganes (27) zum Spannen des Werkzeughalters (6) mit wenigstens einer, zur planen Fläche (18) parallelen Angriffsfläche (33) der weiteren Verriegelungsmittel (31) in Eingriff bringbar ist.

7. Vorrichtung nach einem der Ansprüche 1 bis 6, dadurch gekennzeichnet, dass Mittel (37) zum Begrenzen der Drehbewegung des Spannorganes vorhanden sind.

8. Vorrichtung nach einem der Ansprüche 1 bis 7, dadurch gekennzeichnet, dass die Drehachse des Antriebselementes (13) rechtwinklig zur Achse der Aufnahmeöffnung (5) angeordnet ist.

9. Vorrichtung nach einem der Ansprüche 1 bis 8, dadurch gekennzeichnet, dass zwischen dem Antriebselement (13) und dem Spannorgan (27) ein Mittel (49) zum Umlenken der Drehbewegung angeordnet ist.

10. Vorrichtung nach Anspruche 9, dadurch gekennzeichnet, dass das Umlenkmittel ein Doppelzahnrad (49) mit einem Kegelradteil (51) und einem Stirnradteil (50) ist, dass das Antriebselement (13) ein Kegelrad (55) aufweist, welches mit dem Kegelradteil (51) des Doppelzahnrades (49) im Eingriff steht und dass das Stirnradsegment (38) des Spannorganes (27) in den Stirnradteil (50) des Doppelzahnrades (49) eingreift.

EP 0 478 869 A1

FIG. 1

FIG. 2

FIG. 3

FIG. 4

Europäisches
Patentamt

**EUROPÄISCHER RECHERCHENBERICHT**

Nummer der Anmeldung

EP  90 81 0756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 182 507  (FRANZ BORRMANN)<br>* das ganze Dokument *<br>--- | 1-10 | B 23 B  31/02<br>B 23 Q    3/12 |
| A | EP-A-0 339 282  (PAUL FORKARDT GMBH & CO. KG)<br>* Zusammenfassung; Figuren 1-8 *<br>--- | 1-3, 5-7 | |
| A,D | US-A-4 758 122  (KUBO)<br>* Zusammenfassung; Figuren 1, 2, 8, 9 *<br>--- | 1-8, 10 | |
| A | DE-A-3 235 820  (INNSE INNOCENTI SANTEUSTACCHIO S.P.A.)<br>----- | | |

| RECHERCHIERTE SACHGEBIETE (Int. Cl.5) |
|---|
| B 23 B<br>B 23 Q |

Der vorliegende Recherchenbericht wurde für alle Patentansprüche erstellt

| Recherchenort | Abschlußdatum der Recherche | Prüfer |
|---|---|---|
| BERLIN | 17-05-1991 | CUNY J M J C |